# EUROPÄISCHE PATENTSCHRIFT

(11) **EP 4 011 201 B1**
(45) Veröffentlichungstag und Bekanntmachung des Hinweises auf die Patenterteilung: **21.06.2023**
(21) Anmeldenummer: 21206390.3
(22) Anmeldetag: 04.11.2021
(51) Int. Cl.: A01K 1/02

(54) **STALL**
STABLE
ÉTABLE

(30) Priorität: 09.12.2020 AT 510672020
(43) Veröffentlichungstag der Anmeldung: 15.06.2022
(73) Patentinhaber: Hagmüller, Werner, 4064 Oftering (AT)
(72) Erfinder: Hagmüller, Werner, 4064 Oftering (AT)
(74) Vertreter: Patentanwaltskanzlei Matschnig & Forsthuber OG

(56) Entgegenhaltungen:
- BE-A3- 1 017 509
- US-A- 5 579 719
- US-A- 5 771 837
- US-A1- 2006 260 561

## Beschreibung

Die Erfindung betrifft einen Stall zur Haltung von Nutztieren, insbesondere von Schweinen, wobei der Stall zumindest drei Bereiche aufweist, wobei
- ein erster Bereich als Liege- und/oder Schlafbereich für Nutztiere eingerichtet ist,
- ein zweiter Bereich als Aktivitätsbereich für Nutztiere eingerichtet ist, und
- ein dritter Bereich als Ausscheidungsbereich für Nutztiere eingerichtet ist,

wobei der zweite Bereich zwischen dem ersten und dem dritten Bereich angeordnet ist, wobei der erste, zweite und dritte Bereich entlang einer Stallachse angeordnet sind,
wobei zwischen dem ersten und zweiten Bereich ein Fütterungsbereich für Nutztiere ausgebildet ist, wobei der Fütterungsbereich zumindest einen Futtertrog aufweist, welcher mit Futter befüllbar ist, wobei entlang einer Länge des Futtertrogs Futterentnahmebereiche angeordnet sind, aus welchen Futter von Nutztieren entnehmbar ist,
wobei der Futtertrog zwischen dem ersten und dem zweiten Bereich dergestalt angeordnet ist, dass die Länge des Futtertrogs im Wesentlichen orthogonal auf die Stallachse orientiert ist.

Aus dem Stand der Technik sind gattungsgemäße Ställe für Nutztiere bekannt, wobei Ställe für Nutztiere üblicherweise einen Ruhebereich, einen Aktivitätsbereich, einen Fütterungsbereich, welcher parallel zu einer Stallachse des Stalls orientiert ist, und einen Ausscheidungsbereich aufweisen. Die im Stand der Technik bekannten Ställe bieten, auf Grund ihrer Konstruktion, nur sehr bedingte oder aufwendige Pflege- bzw. Reinigungsmöglichkeiten für den Aktivitätsbereich, da dieser meist einen Fütterungsbereich aufweist. Das Dokument US 2006/260561 A1 zeigt ein Verfahren zum Management von Schweinen in einer Schweineanlage, während sie von einem Anfangsgewicht zu einem Endgewicht heranwachsen. Das Dokument BE 1 017 509 A3 zeigt eine Methode zum Füttern von Tieren in einem Stall. Das Dokument US 5579 719 A zeigt ein Verfahren zum Füttern trächtiger Schweine, basierend auf dem Berechnen der historischen durchschnittlichen Tageszunahme eines Schweins.

Die Aufgabe der vorliegenden Erfindung besteht darin, die Nachteile des Standes der Technik zu lindern bzw. zu beseitigen. Die Erfindung setzt sich daher insbesondere zum Ziel, einen Stall für Nutztiere zu schaffen, bei welchem die Pflegbarkeit des Aktivitätsbereichs verbessert wird.

Diese Aufgabe wird durch einen Stall mit den Merkmalen von Anspruch 1 gelöst. Bevorzugte Ausführungen sind in den abhängigen Ansprüchen angegeben.

Erfindungsgemäß weist der Stall zumindest zwei Trennwände, welche jeweils von einer ersten Position in eine zweite Position überführbar sind, auf, wobei die zumindest zwei Trennwände in ihrer jeweiligen ersten Position im Wesentlichen parallel zur Stallachse orientiert sind und den zweiten Bereich derart begrenzen, dass Nutztiere zwischen ersten und zweiten und zwischen zweiten und dritten Bereich hin und her wechseln können, wobei die zumindest zwei Trennwände in ihrer jeweiligen zweiten Position im Wesentlichen orthogonal zur Stallachse orientiert sind und den zweiten Bereich derart begrenzen, dass Nutztiere im ersten und/oder dritten Bereich gehalten sind.

Dadurch ergibt sich der Vorteil, dass, wenn die Trennwände in der zweiten Position sind, der Aktivitätsbereich schnell und einfach gereinigt werden kann. In der zweiten Position der Trennwände kann der zweite Bereich frei von Nutztieren sein. Dadurch ergibt sich der Vorteil, dass der Aktivitätsbereich (der auch als Futteraufnahmebereich bezeichnet werden kann) besonders einfach zu reinigen ist, da, wenn die zumindest zwei Trennwände in der zweiten Position sind, der zweite Bereich vorzugsweise frei von Nutztieren ist. Insbesondere weist der zweite Bereich keine Futteraufnahmestellen bzw. Futtertröge auf, da diese vorzugsweise im Wesentlichen an dem Grenzbereich zwischen dem ersten und zweiten Bereich und orthogonal zur Stallachse angeordnet sind. Damit kann eine barrierefreie und effiziente, insbesondere maschinelle bzw. automatisierte, Reinigung des Aktivitätsbereichs erfolgen. Vorzugsweise kann der Aktivitätsbereich mit Einstreu ausgestattet werden, wobei das Einbringen von Einstreu erfolgen kann, wenn die zumindest zwei Trennwände in der zweiten Position angeordnet sind. Es kann ein weiterer Futtertrog, welcher zwischen dem zweiten und dritten Bereich, insbesondere an der Grenze zwischen dem zweiten und dritten Bereich, angeordnet ist, vorgesehen sein. Der weitere Futtertrog ist vorzugsweise parallel zu der Grenze zwischen dem zweiten und dritten Bereich bzw. orthogonal auf die Stallachse orientiert. Der Liege- und/oder Schlafbereich ist vorzugsweise dazu eingerichtet, Nutzieren einen Platz zum Schlafen und/oder Liegen bereitzustellen. Der Liege- und/oder Schlafbereich kann Einstreu aufweisen. Der Aktivitätsbereich ist vorzugsweise dazu eingerichtet, den Nutztieren einen Bewegungsbereich oder einen Aufenthaltsbereich, insbesondere zur Nahrungsaufnahme, bereitzustellen. Der Aktivitätsbereich kann Einstreu aufweisen. Der Ausscheidungsbereich ist vorzugsweise dazu eingerichtet, Ausscheidungen von Nutztieren aufzunehmen bzw. weist der Ausscheidungsbereich insbesondere Mittel zur Entsorgung von Ausscheidungen auf. Der Ausscheidungsbereich ist insbesondere frei von Einstreu. Die Länge des Futtertrogs, welche insbesondere als eine Gerade angesehen werden kann, ist im Wesentlichen orthogonal auf die Stallachse orientiert und vorzugsweise liegt die Länge des Stalls in einer Ebene, welche parallel zu der Stallachse orientiert ist. Vorzugsweise ist die Länge des Futtertrogs parallel zu einer Grundfläche des Stalls, welche aus dem ersten, zweiten und dritten Bereich gebildet sein kann, orientiert. Der erste und/oder der zweite und/oder der dritte Bereich können rechteckige, vorzugsweise quadratische, Grundflächen aufweisen. Der zweite Bereich, bzw. die Grundfläche des zweiten Bereichs, kann quadratisch ausgebildet sein, wobei vorzugsweise die Trennwände jeweils eine Länge aufweisen können, welche einer Seitenlänge des quadratischen zweiten Bereichs entspricht.

Es kann vorgesehen sein, dass der zweite Bereich relativ zu dem ersten und dem dritten Bereich vertikal abgesenkt ist. Dadurch ergibt sich der Vorteil, dass, wenn die zumindest zwei Trennwände in der zweiten Position angeordnet sind, eine im Vergleich zu dem ersten und zweiten Bereich tiefer liegende Reinigungsstraße in dem zweiten Bereich ausgebildet sein kann, welche beispielsweise von einem Traktor mit einer Reinigungsvorrichtung befahrbar ist. Dadurch kann vorteilhafterweise Einstreu schnell und einfach aus dem zweiten Bereich entfernt oder in den zweiten Bereich eingebracht werden. Die vertikale Absenkung kann beispielsweise 1-5 cm, 5-10 cm, 10-15 cm, 15-30 cm oder mehr als 30 cm betragen.

Es kann vorgesehen sein, dass der erste, zweite und dritte Bereich reckeckige Grundflächen aufweisen, welche zusammen eine Grundfläche des Stalls ausbilden.

Es ist vorgesehen, dass der erste Bereich von Seiten begrenzt ist, wobei eine erste Seite des ersten Bereichs an den zweiten Bereich angrenzt, wobei die restlichen Seiten des ersten Bereichs jeweils von einem ersten Begrenzungselement begrenzt werden, wobei das erste Begrenzungselement für Nutztiere unüberwindbar ausgebildet ist. Das erste Begrenzungselement kann beispielsweise eine Wand sein.

Es kann vorgesehen sein, dass das erste Begrenzungselement für Nutztiere blickdicht ausgebildet ist. Der Begriff "blickdicht" ist in der gesamten Offenbarung äquivalent zu "undurchsichtig" zu verstehen. Dadurch ergibt sich der Vorteil, dass, wenn mehrere erfindungsgemäße Ställe nebeneinander angeordnet sind, erste Nutztiere, welche sich im ersten Bereich eines ersten Stalls aufhalten, zweite Nutztiere, welche sich im ersten Bereich eines benachbarten Stalls aufhalten, nicht sehen und damit deren Handlungen nicht nachahmen können und insbesondere nicht zur Ausscheidung von Kot/Harn animiert werden.

Es ist vorgesehen, dass der Futtertrog im Wesentlichen entlang der Grenze zwischen dem ersten und zweiten Bereich angeordnet ist. Dadurch ergibt sich der Vorteil, dass die Nutztiere bei der Nahrungsaufnahme über den Futtertrog im Wesentlichen parallel zur Stallachse orientiert sind und etwaige Ausscheidungen oder Verunreinigungen in den leicht zu reinigenden Aktivitätsbereich abgegeben werden können.

Es ist vorgesehen, dass der Futtertrog kürzer als die erste Seite ausgebildet ist. Dadurch ergibt sich der Vorteil, dass die Nutztiere von den ersten in den zweiten Bereich barrierefrei und selbstständig wechseln können.

Es kann vorgesehen sein, dass der erste Bereich zumindest teilweise, vorzugsweise vollständig, überdacht ist. Das Dach kann den ersten Bereich insbesondere vollständig überdachen, wobei das Dach vorzugsweise eine Lüftungsöffnung aufweist, durch welche ein Luftaustausch mit der Stallumgebung stattfinden kann. Das Dach kann derart ausgestaltet sein, alle Bereiche des Stalls teilweise, vorzugsweise vollständig, zu überdachen. Vorzugsweise kann das Dach mit einer Vorrichtung, je nach Witterungsverhältnissen, geöffnet oder geschlossen werden.

Es kann vorgesehen sein, dass der dritte Bereich einen Spaltenboden aufweist. Der dritte Bereich kann alternativ dazu einen Boden aufweisen, welcher spaltenfrei ausgebildet ist. Der dritte Bereich kann eine Entmistungsvorrichtung zum entmisten des dritten Bereichs aufweisen.

Es kann vorgesehen sein, dass der dritte Bereich von Seiten begrenzt ist, wobei eine erste Seite des dritten Bereichs an den zweiten Bereich angrenzt, wobei die restlichen Seiten des dritten Bereichs jeweils von einem zweiten Begrenzungselement begrenzt werden, wobei das zweite Begrenzungselement für Nutztiere unüberwindbar ausgebildet ist. Das zweite Begrenzungselement kann beispielsweise ein Zaun sein.

Es kann vorgesehen sein, dass das zweite Begrenzungselement für Nutztiere durchsichtig ausgebildet ist. Dadurch ergibt sich der Vorteil, dass, wenn mehrere erfindungsgemäße Ställe nebeneinander angeordnet sind, die ersten Nutztiere, welche sich im dritten Bereich eines ersten Stalls aufhalten, die zweiten Nutztiere, welche sich im dritten Bereich eines benachbarten Stalls aufhalten, sehen und damit deren Handlungen nachahmen können und insbesondere zur Ausscheidung von Kot/Harn animiert werden.

Es kann vorgesehen sein, dass ein weiterer Futtertrog im Wesentlichen entlang der ersten Seite des dritten Bereichs, vorzugsweise entlang der Grenze zwischen dem zweiten und dritten Bereich, angeordnet ist. Dadurch ergibt sich der Vorteil, dass Nutztiere an der Grenze zwischen dem ersten und zweiten Bereich und an der Grenze zwischen dem zweiten und dritten Bereich einen Futtertrog zur Entnahme von Nahrung zur Verfügung haben.

Es kann vorgesehen sein, dass an einer dem zweiten Bereich abgewandten Seite des ersten Bereichs und/oder an einer dem zweiten Bereich abgewandten Seite des dritten Bereichs ein Kontrollgangbereich angeordnet ist, wobei der Kontrollgangbereich eine Länge aufweist, welche im Wesentlichen orthogonal auf die Stallachse orientiert ist. Der Kontrollgang ist vorzugsweise gegenüber dem ersten, zweiten und dritten Bereich vertikal erhöht, um eine Sichtkontrolle der Nutztiere zu erleichtern.

Es kann vorgesehen sein, dass die zumindest zwei Trennwände Kunststoff und/oder Holz umfassen. Dadurch ergibt sich der Vorteil, dass die Trennwände ein geringes Gewicht aufweisen und einfach zu reinigen sind.

Es kann vorgesehen sein, dass die zumindest zwei Trennwände verschwenkbar ausgebildet sind, wobei eine erste Trennwand um eine erste Schwenkachse verschwenkbar ist, welche vertikal, vorzugsweise orthogonal auf die Grundfläche des Stalls, orientiert ist und durch einen Eckpunkt des ersten und zweiten Bereichs verläuft.

Es kann vorgesehen sein, dass eine zweite Trennwand um eine zweite Schwenkachse verschwenkbar ist, welche vertikal, vorzugsweise orthogonal auf die Grundfläche des Stalls, orientiert ist und durch einen Eckpunkt des zweiten und dritten Bereichs verläuft.

Es kann vorgesehen sein, dass die erste und zweite Schwenkachse an diagonal gegenüberliegenden Eckpunkten des zweiten Bereichs angeordnet sind.

Es kann vorgesehen sein, dass in der zweiten Position der Trennwände der zweite Bereich entmistbar ist.

Es kann vorgesehen sein, dass der erste, zweite und dritte Bereich in einem gemeinsamen, zusammenhängenden Luftvolumen angeordnet sind. Dadurch ergibt sich der Vorteil, dass es zwischen allen Bereichen zu einem Luftaustausch kommen kann. Vorzugsweise umfasst der Stall eine Belüftungsvorrichtung, wobei durch das zusammenhängende Luftvolumen alle Bereiche mit derselben Belüftungsvorrichtung belüftbar sind. Vorteilhafterweise werden dadurch die Kosten für die Belüftung gesenkt.

Es kann vorgesehen sein, dass der erste Bereich eine Belüftungsvorrichtung aufweist, welche dazu eingerichtet ist, einen Luftaustausch zwischen einem Außenbereich und dem ersten Bereich des Stalls zu ermöglichen. Die Belüftungsvorrichtung ist vorzugsweise dazu eingerichtet, einen Luftaustausch zwischen dem Außenbereich des Stalls und allen Bereichen des Stalls zu ermöglichen.

Es kann vorgesehen sein, dass die zumindest zwei Trennwände für Nutztiere blickdicht ausgebildet sind.

Die Erfindung wird nachstehend anhand eines bevorzugten Ausführungsbeispiels, auf das sie jedoch nicht beschränkt sein soll, noch weiter erläutert. In den Zeichnungen zeigt:

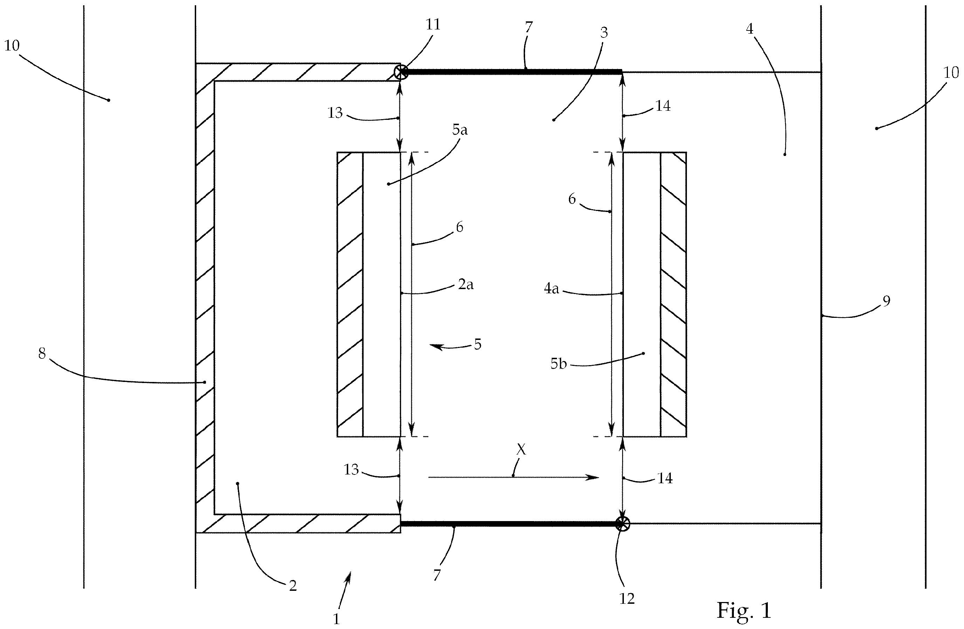

Fig. 1 eine Draufsicht auf einen erfindungsgemäßen Stall.

Fig. 1 zeigt eine skizzierte Draufsicht auf einen Stall 1 zur Haltung von Nutztieren, insbesondere Schweine. Der Stall 1 weist eine, vorzugsweise rechteckige, Grundfläche auf, welche in zumindest drei Bereiche 2, 3, 4 unterteilt ist, wobei in dem gezeigten Ausführungsbeispiel jeder Bereich eine rechteckige Grundfläche aufweist.

Ein erster Bereich 2 der Grundfläche ist als Liege- und/oder Schlafbereich für Nutztiere eingerichtet. Ein zweiter Bereich 3 der Grundfläche ist als Aktivitätsbereich für Nutztiere eingerichtet. Ein dritter Bereich 4 der Grundfläche ist als Ausscheidungsbereich für Nutztiere eingerichtet. Der erste 2, zweite 3 und dritte Bereich 4 bilden ein gemeinsames, zusammenhängendes Luftvolumen.

Der zweite Bereich 3 ist zwischen dem ersten 2 und dem dritten Bereich 4 angeordnet, wobei der erste 2, zweite 3 und dritte Bereich 4 entlang einer Stallachse x angeordnet sind. Der zweite Bereich 3 ist relativ zu dem ersten 2 und dem dritten 4 Bereich vertikal abgesenkt.

Zwischen dem ersten 2 und zweiten Bereich 3 ist ein Fütterungsbereich 5 für Nutztiere ausgebildet, wobei der Fütterungsbereich 5 zumindest einen Futtertrog 5a aufweist, welcher mit Futter befüllbar ist. Der Futtertrog 5a weist eine Länge 6 auf, entlang welcher Futterentnahmebereiche angeordnet sind, aus welchen Futter von Nutztieren entnehmbar ist. In dem gezeigten Ausführungsbeispiel ist ein (optionaler) weiterer Futtertrog 5b im Wesentlichen entlang der Grenze zwischen dem zweiten 3 und dritten Bereich 4 angeordnet. Der Futtertrog 5a bzw. der weitere Futtertrog 5b sind zwischen dem ersten 2 und dem zweiten Bereich 3 bzw. zwischen dem zweiten 3 und dritten Bereich 4 dergestalt angeordnet, dass die Länge 6 des Futtertrogs 5a bzw. 5b im Wesentlichen orthogonal auf die Stallachse x orientiert ist.

Der erste 2, zweite 3 und dritte Bereich 4 weisen reckeckige Grundflächen auf, welche zusammen die Grundfläche des Stalls ausbilden. Der erste Bereich 2 ist im Wesentlichen rechteckig ausgebildet, wobei eine erste Rechteckseite 2a des ersten Bereichs 2 an den zweiten Bereich 3 angrenzt, wobei eine zweite, dritte und vierte Rechteckseite des ersten Bereichs 2 jeweils von einem ersten Begrenzungselement 8 begrenzt werden, wobei das erste Begrenzungselement 8 von Nutztieren unüberwindbar ist. Das erste Begrenzungselement 8 ist für Nutztiere blickdicht ausgebildet. Der Futtertrog 5a ist im Wesentlichen entlang der ersten Rechteckseite 2a des ersten Bereichs angeordnet.

Der dritte Bereich 4 ist im Wesentlichen rechteckig ausgebildet, wobei eine erste Rechteckseite 4a des dritten Bereichs 4 an den zweiten Bereich 3 angrenzt, wobei eine zweite, dritte und vierte Rechteckseite des dritten Bereichs 4 jeweils von einem zweiten Begrenzungselement 9 begrenzt werden, wobei das zweite Begrenzungselement 9 von Nutztieren unüberwindbar ist. Das zweite Begrenzungselement 9 ist für Nutztiere durchsehbar ausgebildet. Der Futtertrog 5b ist im Wesentlichen entlang der ersten Rechteckseite 4a des ersten Bereichs angeordnet.

Der Futtertrog 5a und der weitere Futtertrog 5b sind kürzer als die erste Rechteckseite 2a bzw. 4a ausgebildet, wobei damit erste Durchgänge 13 und zweite Durchgänge 14 gebildet sind. Damit können die Nutztiere zwischen dem ersten 2, zweiten 3 und dritten Bereich 4 barrierefrei wechseln. An den ersten 13 und zweiten Durchgängen 14 können Türen, insbesondere selbstschließende Türen, angebracht sein, welche von Nutztieren geöffnet werden können.

Der Stall 1 weist zumindest zwei Trennwände 7, welche jeweils von einer ersten Position in eine zweite Position überführbar sind, auf. Die zumindest zwei Trennwände 7 können aus Kunststoff, Holz, einem Metall oder einer Kombination daraus gebildet sein und sind insbesondere für Nutztiere blickdicht ausgebildet. Die zumindest zwei Trennwände 7 sind in ihrer jeweiligen ersten Position im Wesentlichen parallel zur Stallachse x orientiert und begrenzen den zweiten Bereich 3 derart, dass Nutztiere vom ersten 2 in den zweiten 3 bzw. vom zweiten 3 in den ersten 2 und vom zweiten 3 in den dritten 4 bzw. vom dritten 4 in den zweiten Bereich 3 hin und her wechseln können. Die zumindest zwei Trennwände 7 sind in ihrer jeweiligen zweiten Position im Wesentlichen orthogonal zur Stallachse x orientiert und begrenzen den zweiten Bereich 3 derart, dass Nutztiere im ersten 2 und/oder dritten Bereich 4 gehalten sind. In der zweiten Position der Trennwände 7 ist der zweite Bereich 3 frei von Nutztieren, somit kann in der zweiten Position der Trennwände 7 der zweite Bereich 3 gereinigt bzw. entmistet werden.

Der erste Bereich 2 kann zumindest teilweise überdacht sein. Der dritte Bereich 4 kann einen Spaltenboden aufweisen.

An einer dem zweiten Bereich 3 abgewandten Seite des ersten Bereichs 2 und/oder an einer dem zweiten Bereich 3 abgewandten Seite des dritten Bereichs 4 ist ein Kontrollgangbereich 10 angeordnet, wobei der Kontrollgangbereich 10 eine Länge aufweist, welche im Wesentlichen orthogonal auf die Stallachse x orientiert ist.

Die zumindest zwei Trennwände 7 sind verschwenkbar ausgebildet, wobei eine erste Trennwand um eine erste Schwenkachse 11 verschwenkbar ist, welche vertikal, vorzugsweise orthogonal auf die Grundfläche des Stalls, orientiert ist und durch einen Eckpunkt des ersten 2 und zweiten Bereichs 3 verläuft. Eine zweite Trennwand ist um eine zweite Schwenkachse 12 verschwenkbar, welche vertikal, vorzugsweise orthogonal auf die Grundfläche des Stalls, orientiert ist und durch einen Eckpunkt des zweiten 3 und dritten Bereichs 4 verläuft.

Die erste 11 und zweite Schwenkachse 12 sind an diagonal gegenüberliegenden Eckpunkten des zweiten Bereichs 3 angeordnet. In der zweiten Position der Trennwände 7 ist der zweite Bereich entmistbar.

Der erste Bereich 2 weist eine (nicht gezeigte) Belüftungsvorrichtung auf, welche dazu eingerichtet ist, einen Luftaustausch zwischen einem Außenbereich und dem ersten Bereich des Stalls 1 zu ermöglichen.

## Patentansprüche

1. Stall (1) zur Haltung von Nutztieren, insbesondere von Schweinen, wobei der Stall (1) zumindest drei Bereiche (2, 3, 4) aufweist, wobei
- ein erster Bereich (2) als Liege- und/oder Schlafbereich für Nutztiere eingerichtet ist,
- ein zweiter Bereich (3) als Aktivitätsbereich für Nutztiere eingerichtet ist, und
- ein dritter Bereich (4) als Ausscheidungsbereich für Nutztiere eingerichtet ist,
wobei der zweite Bereich (3) zwischen dem ersten (2) und dem dritten Bereich (4) angeordnet ist, wobei der erste (2), zweite (3) und dritte Bereich (4) entlang einer Stallachse (x) angeordnet sind,
wobei zwischen dem ersten (2) und zweiten Bereich (3) ein Fütterungsbereich (5) für Nutztiere ausgebildet ist, wobei der Fütterungsbereich (5) zumindest einen Futtertrog (5a) aufweist, welcher mit Futter befüllbar ist, wobei entlang einer Länge (6) des Futtertrogs (5a) Futterentnahmebereiche angeordnet sind, aus welchen Futter von Nutztieren entnehmbar ist,
wobei der Futtertrog (5a) zwischen dem ersten (2) und dem zweiten Bereich (3) dergestalt angeordnet ist, dass die Länge (6) des Futtertrogs (5a) im Wesentlichen orthogonal auf die Stallachse (x) orientiert ist,
**dadurch gekennzeichnet, dass**
der Stall (1) zumindest zwei Trennwände (7), welche jeweils von einer ersten Position in eine zweite Position überführbar sind, aufweist,
wobei die zumindest zwei Trennwände (7) in ihrer jeweiligen ersten Position im Wesentlichen parallel zur Stallachse (x) orientiert sind und den zweiten Bereich (3) derart begrenzen, dass Nutztiere zwischen ersten (2) und zweiten (3) und zwischen zweiten (3) und dritten Bereich (4) hin und her wechseln können,
wobei die zumindest zwei Trennwände (7) in ihrer jeweiligen zweiten Position im Wesentlichen orthogonal zur Stallachse (x) orientiert sind und den zweiten Bereich (3) derart begrenzen, dass Nutztiere im ersten (2) und/oder dritten Bereich (4) gehalten sind, wobei der erste Bereich (2) von Seiten begrenzt ist, wobei eine erste Seite (2a) des ersten Bereichs (2) an den zweiten Bereich (3) angrenzt, wobei die restlichen Seiten des ersten Bereichs (2) jeweils von einem ersten Begrenzungselement (8) begrenzt werden, wobei das erste Begrenzungselement (8) für Nutztiere unüberwindbar ausgebildet ist, wobei der Futtertrog (5a) im Wesentlichen entlang der Grenze zwischen dem ersten (2) und zweiten Bereich (3) angeordnet ist, wobei der Futtertrog (5a) kürzer als die erste Seite (2a) ausgebildet ist.

2. Stall (1) nach Anspruch 1, wobei der zweite Bereich (3) relativ zu dem ersten (2) und dem dritten (4) Bereich vertikal abgesenkt ist.

3. Stall (1) nach einem der vorhergehenden Ansprüche, wobei der erste (2), zweite (3) und dritte Bereich (4) reckeckige Grundflächen aufweisen, welche zusammen eine Grundfläche des Stalls ausbilden.

4. Stall (1) nach einem der vorhergehenden Ansprüche, wobei das erste Begrenzungselement (8) für Nutztiere blickdicht ausgebildet ist.

5. Stall (1) nach einem der vorhergehenden Ansprüche, wobei der erste Bereich (2) zumindest teilweise, vorzugsweise vollständig, überdacht ist.

6. Stall (1) nach einem der vorhergehenden Ansprüche, wobei der dritte Bereich (4) einen Spaltenboden aufweist.

7. Stall (1) nach einem der vorhergehenden Ansprüche, wobei der dritte Bereich (4) von Seiten begrenzt ist, wobei eine erste Seite (4a) des dritten Bereichs (4) an den zweiten Bereich (3) angrenzt, wobei die restlichen Seiten des dritten Bereichs (4) jeweils von einem zweiten Begrenzungselement (9) begrenzt werden, wobei das zweite Begrenzungselement (9) für Nutztiere unüberwindbar ausgebildet ist, wobei vorzugsweise das zweite Begrenzungselement (9) für Nutztiere durchsichtig ausgebildet ist, wobei vorzugsweise ein weiterer Futtertrog (5b) im Wesentlichen entlang der ersten Seite (4a) des dritten Bereichs (4), vorzugsweise entlang der Grenze zwischen dem zweiten (3) und dritten Bereich (4), angeordnet ist.

8. Stall (1) nach einem der vorhergehenden Ansprüche, wobei an einer dem zweiten Bereich (3) abgewandten Seite des ersten Bereichs (2) und/oder an einer dem zweiten Bereich (3) abgewandten Seite des dritten Bereichs (4) ein Kontrollgangbereich (10) angeordnet ist, wobei der Kontrollgangbereich (10) eine Länge aufweist, welche im Wesentlichen orthogonal auf die Stallachse (x) orientiert ist.

9. Stall (1) nach einem der vorhergehenden Ansprüche, wobei die zumindest zwei Trennwände (7) Kunststoff und/oder Holz und/oder Metall umfassen.

10. Stall (1) nach einem der vorhergehenden Ansprüche, wobei die zumindest zwei Trennwände (7) verschwenkbar ausgebildet sind, wobei eine erste Trennwand um eine erste Schwenkachse (11) verschwenkbar ist, welche vertikal, vorzugsweise orthogonal auf die Grundfläche des Stalls, orientiert ist und durch einen Eckpunkt des ersten (2) und zweiten Bereichs (3) verläuft, wobei vorzugsweise eine zweite Trennwand um eine zweite Schwenkachse (12) verschwenkbar ist, welche vertikal, vorzugsweise orthogonal auf die Grundfläche des Stalls, orientiert ist und durch einen Eckpunkt des zweiten (3) und dritten Bereichs (4) verläuft, wobei vorzugsweise die zumindest zwei Trennwände (7) für Nutztiere blickdicht ausgebildet sind.

11. Stall (1) nach Anspruch 9, wobei die erste (11) und zweite Schwenkachse (12) an diagonal gegenüberliegenden Eckpunkten des zweiten Bereichs (3) angeordnet sind.

12. Stall (1) nach einem der vorhergehenden Ansprüche, wobei in der zweiten Position der Trennwände (7) der zweite Bereich entmistbar ist.

13. Stall (1) nach einem der vorhergehenden Ansprüche, wobei der erste (2), zweite (3) und dritte Bereich (4) in einem gemeinsamen, zusammenhängenden Luftvolumen angeordnet sind.

14. Stall (1) nach einem der vorhergehenden Ansprüche, wobei der erste Bereich (2) eine Belüftungsvorrichtung aufweist, welche dazu eingerichtet ist, einen Luftaustausch zwischen einem Außenbereich und dem ersten Bereich (2) des Stalls (1) zu ermöglichen.

## Claims

1. Stable (1) for keeping farm animals, in particular pigs, wherein the stable (1) has at least three areas (2, 3, 4), wherein
- a first area (2) is set up as a lying and/or sleeping area for livestock,
- a second area (3) is arranged as an activity area for farm animals, and
- a third area (4) is arranged as an excretion area for farm animals,
wherein the second area (3) is arranged between the first (2) and the third area (4), wherein the first (2), second (3) and third area (4) are arranged along a stable axis (x),
wherein a feeding area (5) for farm animals is formed between the first (2) and the second area (3), wherein the feeding area (5) comprises at least one feed trough (5a) which can be filled with feed, wherein feed removal areas are arranged along a length (6) of the feed trough (5a), from which feed can be removed by farm animals,
wherein the feed trough (5a) is arranged between the first (2) and the second area (3) in such a way that the length (6) of the feed trough (5a) is oriented substantially orthogonal to the barn axis (x),
**characterized in that**
the stall (1) comprises at least two partition walls (7), each of which is transferable from a first position to a second position
wherein the at least two partition walls (7) in their respective first position are oriented substantially parallel to the stable axis (x) and delimit the second area (3) in such a way that farm animals can move back and forth between the first (2) and second (3) areas and between the second (3) and third (4) areas,
wherein the at least two partition walls (7) are oriented in their respective second position substantially orthogonal to the barn axis (x) and delimit the second area (3) such that farm animals are kept in the first (2) and/or third area (4), wherein the first area (2) is delimited by sides, a first side (2a) of the first area (2) being adjacent to the second area (3), the remaining sides of the first area (2) each being bounded by a first boundary element (8), the first boundary element (8) being formed so as to be impassable for farm animals, the feeding trough (5a) being arranged substantially along the boundary between the first (2) and second area (3), the feeding trough (5a) being formed shorter than the first side (2a).

2. Stable (1) according to claim 1, wherein said second area (3) is vertically lowered relative to said first (2) and third (4) areas.

3. Stable (1) according to any one of the preceding claims, wherein the first (2), second (3) and third (4) areas have rectangular bases which together form a base of the stable.

4. Stable (1) according to any one of the preceding claims, wherein the first boundary element (8) is designed to be opaque to farm animals.

5. Stable (1) according to one of the preceding claims, wherein the first area (2) is at least partially, preferably completely, roofed.

6. Stable (1) according to one of the preceding claims, wherein the third area (4) comprises a slatted floor.

7. Stable (1) according to one of the preceding claims, wherein the third area (4) is bounded by sides, wherein a first side (4a) of the third area (4) adjoins the second area (3), wherein the remaining sides of the third area (4) are each bounded by a second boundary element (9), wherein the second boundary element (9) is designed to be impassable for farm animals, wherein preferably the second boundary element (9) is formed to be transparent for farm animals, wherein preferably a further feeding trough (5b) is arranged substantially along the first side (4a) of the third area (4), preferably along the boundary between the second (3) and third area (4).

8. Stable (1) according to one of the preceding claims, wherein a control aisle area (10) is arranged on a side of the first area (2) facing away from the second area (3) and/or on a side of the third area (4) facing away from the second area (3), wherein the control aisle area (10) has a length which is oriented substantially orthogonally to the stable axis (x).

9. Stable (1) according to any one of the preceding claims, wherein the at least two partition walls (7) comprise plastic and/or wood and/or metal.

10. Stable (1) according to any one of the preceding claims, wherein the at least two partition walls (7) are pivotally formed, wherein a first partition wall is pivotable about a first pivot axis (11) which is oriented vertically, preferably orthogonally to the base area of the stable, and extends through a corner point of the first (2) and second area (3), wherein preferably a second partition wall is pivotable about a second pivot axis (12), which is oriented vertically, preferably orthogonally to the base area of the stable, and runs through a corner point of the second (3) and third area (4), wherein preferably the at least two partition walls (7) are designed to be opaque to farm animals.

11. Stable (1) according to claim 9, wherein the first (11) and second pivot axis (12) are arranged at diagonally opposite corner points of the second area (3).

12. Stable (1) according to any one of the preceding claims, wherein in the second position of the partition walls (7) the second area is demistable.

13. Stable (1) according to any one of the preceding claims, wherein the first (2), second (3) and third areas (4) are arranged in a common, contiguous air volume.

14. Stable (1) according to any one of the preceding claims, wherein the first area (2) comprises a ventilation device which is adapted to allow air exchange between an outdoor area and the first area (2).

## Revendications

1. Étable (1) pour l'élevage d'animaux de rente, en particulier de porcs, l'étable (1) présentant au moins trois zones (2, 3, 4), dans laquelle
- une première zone (2) est aménagée en tant que zone de couchage et/ou de sommeil pour les animaux de rente,
- une deuxième zone (3) est aménagée en tant que zone d'activité pour les animaux de rente, et
- une troisième zone (4) est aménagée comme zone d'excrétion pour les animaux de rente,
la deuxième zone (3) étant disposée entre la première (2) et la troisième zone (4), les première (2), deuxième (3) et troisième (4) zones étant disposées le long d'un axe d'étable (x),
une zone d'alimentation (5) pour animaux de rente est formée entre la première (2) et la deuxième (3) zone, la zone d'alimentation (5) présentant au moins une mangeoire (5a) qui peut être remplie de fourrage, des zones de prélèvement de fourrage étant disposées le long d'une longueur (6) de la mangeoire (5a), dans lesquelles du fourrage peut être prélevé par des animaux de rente,
la mangeoire (5a) étant disposée entre la première (2) et la deuxième (3) zone de telle sorte que la longueur (6) de la mangeoire (5a) est orientée sensiblement orthogonalement à l'axe (x) de l'étable,
**caractérisé en ce que**
l'étable (1) comprend au moins deux cloisons (7) qui peuvent chacune passer d'une première position à une deuxième position,
les au moins deux parois de séparation (7) étant orientées, dans leur première position respective, essentiellement parallèlement à l'axe (x) de l'étable et délimitant la deuxième zone (3) de telle sorte que les animaux d'élevage puissent passer de la première (2) à la deuxième (3) et de la deuxième (3) à la troisième zone (4),
les au moins deux cloisons (7) étant orientées, dans leur deuxième position respective, sensiblement orthogonalement à l'axe (x) de l'étable et délimitant la deuxième zone (3) de telle sorte que les animaux d'élevage sont maintenus dans la première (2) et/ou la troisième zone (4), la première zone (2) étant délimitée par des côtés, un premier côté (2a) de la première zone (2) étant adjacent à la deuxième zone (3), les côtés restants de la première zone (2) étant délimités chacun par un premier élément de délimitation (8), le premier élément de délimitation (8) étant réalisé de manière à être infranchissable pour les animaux d'élevage, la mangeoire (5a) étant disposée essentiellement le long de la limite entre la première (2) et la deuxième zone (3), la mangeoire (5a) étant réalisée plus courte que le premier côté (2a).

2. Étable (1) selon la revendication 1, dans laquelle la deuxième zone (3) est abaissée verticalement par rapport à la première (2) et à la troisième (4) zones.

3. Étable (1) selon l'une des revendications précédentes, dans laquelle la première (2), la deuxième (3) et la troisième (4) zones présentent des surfaces de base angulaires qui forment ensemble une surface de base de l'étable.

4. Étable (1) selon l'une des revendications précédentes, dans laquelle le premier élément de délimitation (8) est conçu de manière à être opaque pour les animaux d'élevage.

5. Étable (1) selon l'une des revendications précédentes, dans laquelle la première zone (2) est au moins partiellement, de préférence entièrement, couverte.

6. Étable (1) selon l'une des revendications précédentes, dans laquelle la troisième zone (4) comprend un caillebotis.

7. Étable (1) selon l'une des revendications précédentes, dans laquelle la troisième zone (4) est délimitée par des côtés, un premier côté (4a) de la troisième zone (4) étant adjacent à la deuxième zone (3), les côtés restants de la troisième zone (4) étant délimités chacun par un deuxième élément de délimitation (9), le deuxième élément de délimitation (9) étant conçu pour être infranchissable par les animaux de rente, de préférence le deuxième élément de délimitation (9) étant conçu de manière transparente pour les animaux de rente, de préférence une autre mangeoire (5b) étant disposée essentiellement le long du premier côté (4a) de la troisième zone (4), de préférence le long de la limite entre la deuxième (3) et la troisième zone (4).

8. Étable (1) selon l'une des revendications précédentes, dans laquelle une zone de couloir de contrôle (10) est disposée sur un côté de la première zone (2) opposé à la deuxième zone (3) et/ou sur un côté de la troisième zone (4) opposé à la deuxième zone (3), la zone de couloir de contrôle (10) présentant une longueur qui est orientée sensiblement orthogonalement à l'axe d'étable (x).

9. Étable (1) selon l'une des revendications précédentes, dans laquelle les au moins deux cloisons (7) comprennent du plastique et/ou du bois et/ou du métal.

10. Étable (1) selon l'une des revendications précédentes, dans laquelle les au moins deux cloisons (7) sont pivotantes, une première cloison pouvant pivoter autour d'un premier axe de pivotement (11) orienté verticalement, de préférence orthogonalement à la surface de base de l'étable, et passant par un point d'angle de la première (2) et de la deuxième (3) zone, de préférence une deuxième paroi de séparation pouvant pivoter autour d'un deuxième axe de pivotement (12) qui est orienté verticalement, de préférence orthogonalement à la surface de base de l'étable, et qui passe par un point d'angle de la deuxième (3) et de la troisième zone (4), de préférence les au moins deux parois de séparation (7) étant réalisées de manière à être opaques pour les animaux de rente.

11. Étable (1) selon la revendication 9, dans laquelle le premier (11) et le deuxième (12) axes de pivotement sont disposés à des points d'angle diagonalement opposés de la deuxième zone (3).

12. Étable (1) selon l'une quelconque des revendications précédentes, dans laquelle, dans la deuxième position des cloisons (7), la deuxième zone peut être désenfumée.

13. Étable (1) selon l'une quelconque des revendications précédentes, dans laquelle les première (2), deuxième (3) et troisième (4) zones sont disposées dans un volume d'air commun et contigu.

14. Étable (1) selon l'une des revendications précédentes, dans laquelle la première zone (2) comporte un dispositif de ventilation agencé pour permettre un échange d'air entre une zone extérieure et la première zone (2) de l'étable (1).
